Europäisches Patentamt

European Patent Office

Office européen des brevets

(11) Veröffentlichungsnummer: **0 220 490**
**B1**

(12) **EUROPÄISCHE PATENTSCHRIFT**

(45) Veröffentlichungstag der Patentschrift:
08.02.89

(51) Int. Cl.⁴: **C08G 75/02**

(21) Anmeldenummer: 86113070.6

(22) Anmeldetag: 23.09.86

(54) **Verfahren zur Isolierung von Polyarylensulfiden.**

(30) Priorität: 04.10.85 DE 3535455

(43) Veröffentlichungstag der Anmeldung:
06.05.87 Patentblatt 87/19

(45) Bekanntmachung des Hinweises auf die Patenterteilung:
08.02.89 Patentblatt 89/6

(84) Benannte Vertragsstaaten:
**DE FR GB IT**

(56) Entgegenhaltungen:
**EP-A- 0 092 723**
**EP-A- 0 096 384**
**EP-A- 0 102 536**
**US-A- 3 457 242**
**US-A- 4 421 874**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk(DE)**

(72) Erfinder: **Alfes, Franz, Dr., Kruse Bömke 7, D-4150 Krefeld 1(DE)**
Erfinder: **Alewelt, Wolfgang, Dr., Bodelschwinghstrasse 32, D-4150 Krefeld 1(DE)**
Erfinder: **Eisermann, Wolfgang, Dr., Auf der Krone 22, D-4000 Düsseldorf 31(DE)**
Erfinder: **Tresper, Erhard, Dr., Dahlerdyk 154, D-4150 Krefeld 1(DE)**

## Beschreibung

Gegenstand der Erfindung ist ein Verfahren zur Isolierung von Polyarylensulfiden. Dabei werden Polyarylensulfide mit besonders niedrigem Elektrolytgehalt erhalten.

Polyarylensulfide ihre Herstellung und Isolierung sind bekannt (z.B. US-PS 2 513 188).

Im allgemeinen wird zur Isolierung von Polyarylensulfiden die heterogene, Salze enthaltende Produktlösung nach der Reaktion gefällt. Die anorganischen Salze werden aus dem gefällten Polyarylensulfid mit Wasser ausgewaschen. Anschließend wird das bis zu 500 Gew.-% (bezogen auf Polymer) Wasser und/oder andere Extraktionsmittel enthaltende Polyarylensulfid bei erhöhter Temperatur, gegebenenfalls im Vakuum, getrocknet. Im getrockneten Polyarylensulfid sind dennoch Restgehalte von $\geq$ 1000 ppm Chlorid nachzuweisen.

Es wurde nun gefunden, daß man Polyarylensulfide mit sehr geringem Restelektrolytgehalt und stark verbesserten elektrischen Eigenschaften erhält, wenn man vor der Fällung der Umsetzungslösung des entstandene Kochsalz, nicht umgesetzte Sulfide und gegebenenfalls weitere, den Reaktionsablauf fördernde Salze, die sich in der Umsetzungslösung als feste Phase befinden, durch im Prinzip bekannte Verfahren bei Temperaturen oberhalb der Erstarrungstemperatur der Lösung abtrennt.

Die Polyarylensulfide, die auch verzweigt sein können, sind z.B. durch Umsetzung von Dihalogenaromaten, gegebenenfalls unter Zusatz von Tri- und Tetrahalogenaromaten und Alkalisulfiden in organischen Lösungsmitteln nach bekannten Verfahren gegebenenfalls unter Überdruck, herstellbar.

Erfindungsgemäß wird die Umsetzungslösung nach der Polymeristionreaktion durch ein beheiztes Druckfilter filtriert. Bevorzugt werden als Filtermedien unter diesen Bedingungen beständige Drahtsiebe oder Sinterplatten eingesetzt, deren Maschenweite oder Porengrößen in weitem Bereich einstellbar sind und die von den gewählten Filterbedingungen, z.B. Viskosität der Lösung, Filterdruck, Temperatur, von dem gewünschten Reinheitsgrad des Filtrats usw. abhängen. Die zur Filtration verwendeten technischen Geräte sind bekannt, beispielsweise können einfache Druckfilter, Rührwerksdrucknutschen, Schälschleudern, Drehfilter u.a. eingesetzt werden.

Gegenstand der Erfindung ist daher ein Verfahren zur Aufarbeitung einer Umsetzungslösung wie sie bei der Herstellung von Polyphenylensulfid nach der Polymerisation anfällt, dadurch gekennzeichnet, daß bei Temperaturen >180°C, vorzugsweise >210°C die Umsetzungslösung nach der Polymerisationsreaktion durch ein beheiztes Druckfilter aus Drahtsieben oder Sinterplatten, dessen bzw. deren Porengrößen im Bereich von 0,5 bis 500, bevorzugt 10 bis 200 μm, einstellbar sind, gegebenenfalls unter Druck filtriert wird.

Eine bevorzugte Ausführungsform verwendet dasselbe, bereits mit Kochsalz belegte Filter. Die Kochsalz-Filterschicht wird dabei nach einer vorteilhaften Ausführungsform vor dem zweiten Filtrationsschritt bis auf eine Restschicht von 0,5-1 cm von oben abgetragen. Das Kochsalz kann ein- oder mehrmals mit heißem organischen Lösungsmittel, vorzugsweise dem Lösungsmittel der Polyarylensulfidreaktion, extrahiert werden. Dabei wird der Gehalt an Polymerem im Kochsalz auf Werte unter 0,05 % gesenkt. Das erfindungsgemäße Verfahren erlaubt es, mehr als 90 %, bevorzugt mehr als 98 % der in der Reaktionslösung enthaltenen Salze abzutrennen.

Eine weitere vorteilhafte, insbesondere für kontinuierlichen Betrieb geeignete Arbeitsweise, ist die Aufgabe der Reaktionslösung vor der eigentlichen Filtration auf eine beheizte Dekanter-Zentrifuge. Im Dekanter kann die Abtrennung, Waschung und Entfeuchtung der Salze erfolgen, so daß dem anschließenden Filtrationsschritt eine relativ salzarme Produktlösung zugeführt werden kann. Eine bevorzugte Ausführungsform ist die Wiederanmischung der abgetrennten Salze mit dem zum Waschen verwendeten Lösungsmittel und eine erneute Fest-Flüssig-Trennung auf der Dekantierzentrifuge unter Rückführung des Lösungsmittels in den ersten Trennschritt oder in die Reaktion.

Das erhaltene Kochsalz kann auf übliche Weise weiterverarbeitet werden.

Die erfindungsgemäß von suspendierten Salzen befreite Reaktionslösung wird auf bekannte Weise weiter aufgearbeitet. Beispielsweise kann sie in ein Fällmittel wie Wasser oder ein wasserhaltiges Medium eingetragen und das Polyarylensulfid so ausgefällt und weiter gereinigt werden.

Das erhaltene Fällgut kann grob/feinpulvrig oder faser- oder plättchenförmig sein oder, wenn es sich als vorteilhaft erweist, in eine entsprechende andere Form vor der Weiterverarbeitung gebracht werden. Es ist ein besonderer Vorteil des Verfahrens, daß sich die wasserlöslichen Verunreinigungen im abgetrennten Kochsalz befinden, so daß je nach Filtrationsgüte auf Wasserwäschen des abgetrennten Polyarylensulfids verzichtet werden kann. Gegebenenfalls wird das Fällgut mit organischen Extraktionsmitteln extrahiert, um das organische Lösungsmittel zu entfernen und eine schonende Trocknung zu gewährleisten.

Die durch das erfindungsgemäße Verfahren behandelten Produkte zeichnen sich durch geringe Formenkorrosion und besonders gute elektrische Eigenschaften aus. Sie können mit anderen Polymeren, Pigmenten und Füllstoffen, beispielsweise Graphit, Metallpulver, Glaspulver, Quarzmehl oder Glasfasern gemischt oder mit den für Polyarylensulfide üblichen Additiven, beispielsweise üblichen Stabilisatoren und Entformungsmitteln, versetzt werden. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden z.B. als Automobilteile, Armaturen, Elektroteile, z.B. Schalter, Platinen, elektronische Tafeln, chemikalienresistente und verwitterungsstabile Teile wie Pumpengehäuse und Pumpenflügelräder, Ätzbadschalen, Dichtungsringe, Teile von Büromaschinen und Fernmeldeeinrichtungen, sowie Haushaltsgeräten, Ventilen oder Kugellagerteilen.

Herstellung eines Polyphenylsulfids

In einem mit Rührer und Destillationsaufsatz ausgerüstetem Rührbehälter werden 1.290 g Natriumsulfidtrihydrat (= 10,0 Mol Na₂S), 204,1 g Natriumacetat-trihydrat (15 Mol-%, bezogen auf Na₂S) und 4000 ml N-Methylcaprolactam vorgelegt und auf 200°C erhitzt. Dabei destilliert eine Flussigkeit ab, die im wesentlichen aus Wasser besteht.

Anschließend werden 1.470 g 1,4-Dichlorbenzol, gelöst in 500 ml N-Methylcaprolactam zugegeben und das Reaktionsgemisch auf 240°C aufgeheizt und 5 h bei dieser Temperatur belassen.

Beispiel 1:

Der Inhalt des Rührbehälters wird in eine auf 220°C beheizte Drucknutsche gegebenen, die mit einem Drahtgewebe von 40 μm Maschenweite be-legt ist. Mit einem Stickstoffdruck von 4 bar wird der Ansatz durch das sich auf dem Drahtgewebe absetzende Kochsalz in eine auf 220°C beheizte Vorlage filtriert. Der NaCl-Gehalt in der filtrierten Lösung liegt unter 0,2 %. Das Reaktionsgemisch wird dann unter kräftigem Rühren in 30 l vorgelegtes Wasser eingetragen, das mit Phosphorsäure auf pH 1 gestellt wurde. Anschließend wird das ausgefallene Polyphenylsulfid mit Wasser solange gewaschen, bis das ablaufende Wasser eine Leitfähig-keit von ≤ 20 μ S hat.

Nach 8 stündiger Trockung des Polyphenylensulfids im Vakuum bei 140°C liegt der Chloridgehalt des Polymeren unter 1 ppm. Das Produkt wird zu einer 2 mm dicken rechteckigen Platte der Maße 30 x 30 mm verpreßt; die elektrische Durchschlagsfestigkeit beträgt <100 kV/mm bei 20°C.

Ein Vergleichsansatz, dessen Salz von der Fällung nicht abgetrennt wurde, wird in gleicher Form gewaschen und gemessen. Die elektrischen Durchschlagsfestigkeit einer 2 mm dicken rechteckigen Platte mit den Maßen 30 x 30 mm beträgt 39 kV/mm.

Beispiel 2:

In einem 600 l fassenden Rührkessel wird der 60 fache Ansatz eines Polyphenylensulfids wie vorher beschrieben hergestellt. Die NaCl-haltige Suspen-sion wird über den mittigen Suspensionszulauf mit einer Geschwindigkeit von 40 l/Minute auf einen auf 220°C beheizten Dekanter gedrückt, dessen Trommel mit einer Geschwindigkeit von 2000 Umdrehungen pro Minute rotiert. Das abgesetzte Salz wird durch eine mit gegenüber der Trommel um 14 Umdrehungen pro Minute abweichender Drehzahl angetriebenen Schnecke in Richtung zum kleineren Durchmesser gefördert und dort abgeworfen. Die geklärte Flüssigkeit läuft am anderen Ende der Trommel über in eine auf 220°C beheizte Drucknutsche, die mit einer Sinterplatte von 20 μm Porenwei-te belegt ist. Mit einem Stickstoffdruck von 5 bar wird der Ansatz in eine auf 220°C heiße Vorlage fil-triert. Der NaCl-Gehalt in der filtrierten Lösung liegt unter 0,1 %. Die filtrierte Lösung wird dann unter kräftigem Rühren in 3000 l Wasser eingetragen, das mit Salzsäure auf pH 1 eingestellt wurde. Anschließend wird das ausgefallene Polyphenylsulfid mit destilliertem Wasser solange gewaschen, bis das ablaufende Wasser eine Leitfähigkeit ≥ 20 μ S hat.

Nach 8-stündiger Trocknung des Polyphenylsulfids bei 140°C liegt der Chloridgehalt des Polymeren unter 1 ppm. Ein Spritzgußprüfkörper der Maße 120 x 15 x 4 mm wies eine Kriechstromfestigkeit nach DIN 53480 von 150 und einen Aschegehalt von 0,02 % auf.

Ein Vergleichsansatz, dessen Salz vor der Fällung nicht abgetrennt wurde, wurde in gleicher Weise gewaschen, getrocknet und gemessen. Die Kriechstromfestigkeit nach DIN 53480 betrug 50, der Aschegehalt 0,2 %.

## Patentansprüche

1. Verfahren zur Aufarbeitung einer Umsetzungslösung, die bei der Herstellung von Polyphenylensulfid nach der Polymerisation anfällt, dadurch gekennzeichnet, daß bei Temperaturen >180°C, vorzugsweise >210°C die Umsetzungslösung nach beendeter Umsetzung durch ein beheiztes Druckfilter aus Drahtsieben oder Sinterplatten, dessen bzw. deren Porengrößen im Bereich von 10 bis 200 μm einstellbar sind, gegebenenfalls unter Druck filtriert wird.

2. Verfahren nach Anspruch 1 dadurch gekennzeichnet, daß man das Verfahren zur Abtrennung der Salze kontinuierlich durchführt.

3. Verfahren nach Anspruch 1 dadurch gekennzeichnet, daß man dem eigentlichen Filtrationsschritt eine Dekantierzentrifuge vorschaltet.

## Claims

1. Process for working up a solution of reaction product obtained in the preparation of polyphenylene sulphide by polymerisation, characterised in that after the reaction, the solution of reaction product is filtered at temperatures >180°C, preferably >120°C, optionally under pressure, through a heated pressure filter of wire sieves or sintering plates the pore sizes of which can be adjusted within the range of from 10 to 200 μm.

2. Process according to claim 1 characterised in that the process is carried out continuously for the separation of the salts.

3. Process according to claim 1, characterised in that a decanting centrifuge is used before the filtration step proper.

## Revendications

1. Procédé de traitement d'une solution de réaction, qui est obtenue après la polymérisation dans la production de polyphénylènesulfure, caractérisé en ce qu'on filtre, éventuellement sous pression, à des températures supérieures à >180°C, de préférence supérieures à >210°C, la solution de réaction, une fois que la réaction est terminée, à travers un filtre-presse chauffé constitué de tamis de fil métallique ou de plaques frittées dont les diamètres de pores sont réglables dans l'intervalle de 10 à 200 µm.

2. Procédé suivant la revendication 1, caractérisé en ce que le procédé de séparation des sels est mis en œuvre en continu.

3. Procédé suivant la revendication 1, caractérisé en ce qu'une centrifugeuse à décantation est insérée en amont de l'opération de filtration proprement dite.